# EUROPÄISCHE PATENTSCHRIFT

(11) **EP 2 025 964 B1**
(45) Veröffentlichungstag und Bekanntmachung des Hinweises auf die Patenterteilung: **18.12.2013**
(21) Anmeldenummer: 08012664.2
(22) Anmeldetag: 14.07.2008
(51) Int. Cl.: F16D 48/06

(54) **Verfahren zur Plausibilisierung eines Referenzpunktes eines Hebelaktors**
Method for verification of a reference point of a lever actuator
Procédé de vérification d'un point de référence d'un actionneur de levier

(30) Priorität: 07.08.2007 DE 102007037264
(43) Veröffentlichungstag der Anmeldung: 18.02.2009
(73) Patentinhaber: Schaeffler Technologies AG & Co. KG, 91074 Herzogenaurach (DE)
(72) Erfinder: Küpper, Klaus, Dr., 8010 Graz (AT)

(56) Entgegenhaltungen:
- EP-A1- 2 148 996
- DE-A1-102007 008 977
- DE-A1-102007 021 232
- GB-A- 2 293 426

## Beschreibung

Die vorliegende Erfindung befasst sich mit einem Verfahren zur Plausibilisierung eines Referenzpunktes eines Kupplungsaktors, gemäß dem Oberbegriff des Anspruches 1.

Aus der Fahrzeugtechnik ist bekannt, dass zum Betätigen einer Kupplung bei automatisierten Getrieben zumindest ein Aktor verwendet wird. Um eine genaue Steuerung des Aktors und somit auch der Kupplung vornehmen zu können, wird durch Wegmessungen die Stellung des Aktors überwacht. Wird für den Kupplungsaktor keine absolute Wegmessung, also eine Wegmessung, die die absolute Stellung des Aktors wiedergibt, verwendet, kann eine Inkrementalwegmessung vorgesehen sein, welche entsprechend Inkrementalwegmesssensoren aufweist und die Stellung des Aktors in Inkrementen relativ zu einem Referenzpunkt misst. Bei der Verwendung von so genannten EC-Motoren sind Inkrementalwegmesssensoren direkt in den Motoren integriert.

Es hat sich gezeigt, dass die Inkrementalwegmessung regelmäßig abgeglichen werden sollte, so dass sich die Messungen nicht über die Zeit verschieben und so falsche Positionssdaten, der Steuerung des Aktors und somit der Steuerung der Kupplung zu Grunde gelegt werden. Bei dem Abgleich der Inkrementalwegmessung kann mit dem Aktor ein Referenzpunkt angefahren werden und die Position des Referenzpunktes als Nullpunkt oder als Kupplungsreferenzposition zum Abgleich der Inkrementalwegmessung verwendet werden.

Die Dokumente GB 2 293 426 A, DE 10 2007 021 232 A1, DE 10 2007 008 977 A1 sowie die EP 2 148 996 A1 offenbaren Verfahren zur Plausibilisierung eines Referenzpunktes eines Kupplungsaktors.

DE4433825C2 zeigt einen Aktor für eine Kraftfahrzeugreibungskupplung. Dieser Aktor umfasst einen Antrieb, ein dessen Bewegung in eine im wesentlichen translatorische Bewegung eines Ausgangsgliedes umsetzendes Getriebe, dessen Bewegungsbereich in den möglichen Bewegungsrichtungen durch zumindest einen Anschlag begrenzt ist, sowie eine Kupplungslageregelung. Die Kupplungslageregelung weist eine Überwachungsvorrichtung auf, in der eine Messvorrichtung den Antrieb auf Energiezufuhr und Wirkrichtung der zugeführten Energie überprüft und durch einen Inkrementalgeber wird die Stellungsänderung des Getriebes überwacht. Ergibt eine Energiezufuhr am Antrieb keine Stellungsänderung am Inkrementalgeber zeigt dies das Erreichen des in der Wirkrichtung liegenden Anschlags an und hat die Festschreibung der erreichten Stellung als neue Anschlagstellung in der Messvorrichtung zur Folge.

WO2006/1361401 zeigt ein Verfahren zur stromlosen Referenzierung der Kupplungsposition bei einer nicht selbsthaltender Kupplungsaktorik, wobei zur Referenzierung einer Kupplungsreferenzposition die Kupplungsaktorik für einen vorgegebenen ersten Zeitraum stromlos geschalten wird und bei Stillstand der Kupplungsaktorik die erreichte Kupplungsposition in einer ersten Messung ermittelt wird und für einen vorgegebenen weiteren Zeitraum eine Bestromung des Kupplungsaktors erfolgt und die Kupplungsaktorik anschließen für einen vorgegebenen weiteren Zeitraum oder bis zum Auftreten eines Motorstillstandes erneut stromlos geschaltet wird und danach in einer weiteren Messung die Kupplungsposition bestimmt und anschließend überprüft wird, ob die gemessenen Kupplungspositionen als neue Kupplungsreferenzposition übernommen werden kann.

Wird nun der Kupplungsaktor über eine Rutschkupplung durch einen Motor angetrieben, so rutscht die Rutschkupplung durch, sobald der Kupplungsaktor gegen einen Widerstand angetrieben wird. Dies verhindert Schäden am Kupplungsaktor, falls der Kupplungsaktor gegen einen Anschlag oder einen sonstigen Widerstand bewegt wird. Jedoch behindert die Verwendung einer Rutschkupplung auch das zuverlässige Erfassen des Anschlages "Kupplung geschlossen", da bei Erreichen des Anschlags zwar der Motor noch weiter gefahren werden kann, jedoch die Rutschkupplung ein Bewegen der Teile, die der Rutschkupplung nachgeordnet sind, verhindert. Eine zuverlässige Referenzierung oder eine Plausibilisierung eines Referenzpunktes ist also mit Kupplungsaktoren, die eine Rutschkupplung umfassen, kaum möglich.

Aufgabe der Erfindung ist es bei Aktoren eine zuverlässige Plausibilisierung des Referenzpunktes zur ermöglichen.

Die Aufgabe wird gelöst durch ein Verfahren gemäß Anspruch 1, insbesondere durch ein Verfahren zur Plausibilisierung eines Referenzpunktes eines Aktors zur Betätigung einer Kupplung, umfassend mindestens einen vom Referenzpunkt verschieden Anschlag, mit den Verfahrensschritten:
- Referenzierung des Referenzpunktes,
- Verfahren des Aktors um eine Strecke, die geringer ist als die Strecke zwischen dem Referenzpunkt und dem Anschlag, bzw. bis zum Anschlag
- nochmaliges Referenzieren des Referenzpunktes.

Unter einem Anschlag ist dabei ein mechanischer Anschlag zu verstehen oder ein Widerstand in einer Bewegungsrichtung der Kupplung bei einem fehlerfreien Zustand, also keine unbeabsichtigten Widerstände, die beispielsweise durch Verschmutzung verursacht werden können.

Bevorzugt liegt der Anschlag so, dass die Bewegung des Aktors zu einer Seite der linearen Aktor-Trajektorie begrenzt ist.

Wird bei der ersten Referenzierung des Referenzpunktes der korrekte Referenzpunkt gefunden, so wird durch das Verfahren des Aktors um eine Strecke, die geringer ist als die Strecke zwischen dem Referenzpunkt und dem Anschlag, der Anschlag nicht erreicht.

In einem weiteren Schritt wird ermittelt, ob der Anschlag nicht erreicht wurde, bzw. ob die Strecke zwischen dem Anschlag und dem Referenzpunkt mindestens die vorbestimmte Strecke ist. Ist dies der Fall, so ist der Referenzpunkt plausibel.

Durch die Plausibilisierung des Referenzpunktes über das Ermitteln, ob der Aktor unerwartet den Anschlag erreichte, können auch Referenzpunkte plausibilisiert werden bei Aktoren mit einer Rutschkupplung, ohne dass die Rutschkupplung die Plausibilisierung gefährdet.

Bevorzugt wird der Aktor von einem Motor, wie einem Elektromotor, angetrieben.

Dieser Motor kann mit einer Inkrementalwegmessung versehen werden, wobei die Inkrementalwegmessung keine absolute Wegmessung vornimmt, sondern den Weg von einem Referenzpunkt in Inkrementen misst. Solche Inkrementalwegmessungen können in einen Motor integriert werden, so dass eine kompakte Bauweise erreicht werden kann.

Bevorzugt bewegt der Motor über eine Rutschkupplung den Aktor. Diese Rutschkupplung kann zum Beispiel zwischen dem Motor und einer vom Motor angetriebenen Spindel platziert werden, so dass der Motor nur ein vorbestimmtes maximales Moment auf die Spindel übertragen und so nur ein bestimmtes maximales Moment auf den Anschlag übertragen werden kann, um eine Beschädigung des Aktors zu verhindern.

Insbesondere wird die Differenz zwischen den beiden Referenzierungen zur Plausibilisierung ausgewertet. Die Differenz ergibt sich dabei aus Messwerten die durch die Inkrementalwegmessung am Ende der ersten und der zweiten Referenzierung erhalten wurden. Ist diese Differenz innerhalb einer gewissen Toleranz, so kann die Referenzierung als plausibel einem Steuergerät zugeleitet werden. Nach der Plausibilisierung des Referenzpunktes kann die Erkennung der Position des Aktors über den Inkrementalwegsensor durchgeführt werden.

Insbesondere entspricht die Referenzposition der Position "Kupplung offen". Diese Referenzposition kann zum Beispiel gefunden werden in dem eine selbst öffnende Kupplung den Aktor in Richtung des Referenzpunktes drückt. Die Referenzposition ist dabei bevorzugt ebenfalls ein Anschlag, der die Bewegung des Aktors in Richtung "Kupplung zu" begrenzt.

In einer bevorzugten Ausführungsform findet die Referenzierung in der Art statt, dass die Rutschkupplung nicht durchrutscht. Da bei einem Durchrutschen der Rutschkupplung der Referenzpunkt nicht mehr eindeutig festgestellt werden kann, wird bevorzugt der Aktor in einer solchen Art und Weise an den Referenzpunkt heran gefahren, dass die Rutschkupplung nicht betätigt wird.

In einer besonderen Ausführungsform ist die Kupplung eine selbst öffnende Kupplung und der Aktor wird im Zuge der Referenzierung durch die Kupplung gegen den Referenzpunkt gedrückt. So ist in besonderen Fällen auch eine Referenzierung des Aktors möglich, ohne dass der Aktor vom Motor in eine bestimmte Richtung aktiv bewegt wird. Insbesondere dadurch kann auch erreicht werden, dass die Rutschkupplung nicht bei der Referenzierung betätigt wird und eine genaue Referenzierung möglich ist.

In einer weiteren besonderen Ausführungsform wird bei der Referenzierung die Geschwindigkeit des Aktors aktiv begrenzt. Dies kann einerseits über eine, durch die Mechanik im Aktor bestehende Reibung, geschehen oder indem der Motor, der vom Aktor umfasst wird, entgegen der Bewegungsrichtung bestromt wird und so der Bewegung der Kupplung einen Widerstand entgegensetzt.

Damit kann die Geschwindigkeit des Aktors begrenzt werden und sich der Aktor in Richtung des Referenzpunktes bewegen und somit das Auslösen der Rutschkupplung verhindern.

In einer weiteren besonderen Ausführungsform ist eine Zeitbegrenzung beim Verfahren des Aktors zwischen dem Referenzpunkt und dem Anschlag vorgesehen. Dies ist insbesondere vorteilhaft, wenn der Aktor keine Rutschkupplung aufweist, so dass der Aktor nach einer bestimmten Zeitspanne in seiner Bewegung gestoppt wird, wenn der Referenzpunkt oder der Anschlag nicht korrekt gefunden wurde. In diesem Fall wird die Betätigung des Motors nach einer gewissen Zeit eingestellt und der Aktor wieder in Richtung Referenzposition verfahren.

In einer weiteren besonderen Ausführungsform, insbesondere wenn der Aktor keine Rutschkupplung aufweist, kann die Differenz zwischen dem Endpunkt der Bewegung des Aktors in Richtung des Anschlages und dem Referenzpunkt bei der zweiten Referenzierung zur Plausibilisierung des Referenzpunktes herangezogen werden. So kann, falls ein Hindernis bei der zweiten Referenzierung wegfällt, der bei der zweiten Referenzierung erkannte Referenzpunkt dennoch als plausibel erkannt werden.

Im Folgenden wird die Erfindung mittels zweier Ausführungsbeispiele anhand der Zeichnungen, die den Schutzbereich jedoch nicht einschränken, weiter erläutert.

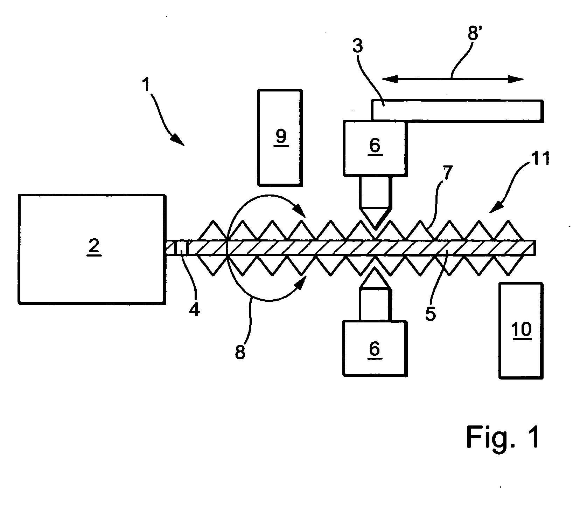

In den Zeichnungen zeigt
- Fig. 1: einen Aktor in einer besonders vereinfachten Darstellung,

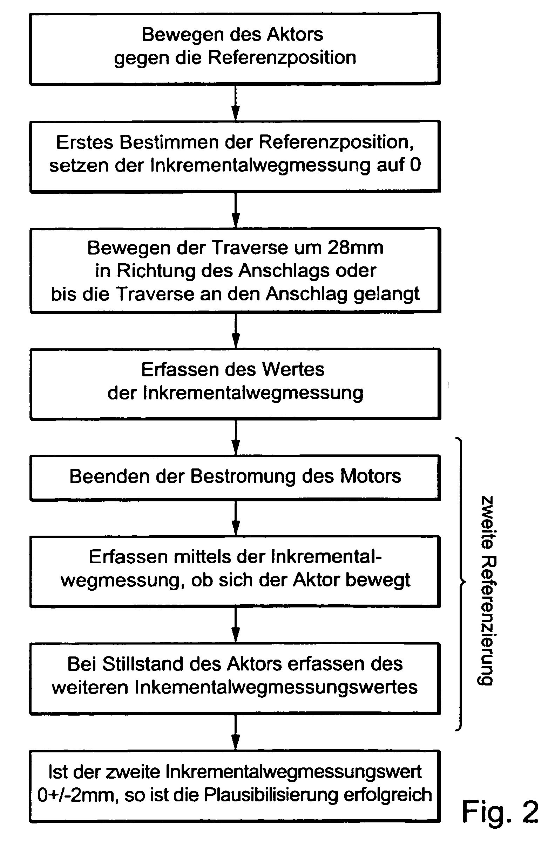

- Fig. 2: das Verfahren anhand eines Flussdiagramms.

Ein Aktor 1 weist einen Elektromotor 2 mit Inkrementalwegmessung auf. Der Aktor ist dabei durch eine Verbindung 3 einer Fahrzeugkupplung zugeordnet, um diese Fahrzeugkupplung zumindest in einer Richtung zu bewegen. Der Elektromotor bewegt über eine Rutschkupplung 4 eine Spindel 5 und die der Spindel nachgeordnete Traverse 6. Die Spindel 5 weist dabei ein Gewinde 7 auf, in die die Traverse 6 eingreift. So wird die rotatorische Bewegung 8 des Motors in die translatorische Bewegung 8' der Traverse 6 überführt.

Die Traverse ist über die Verbindung 3 mit der Kupplung funktionell verbunden.

Soll nun eine Referenzposition 9 plausibilisiert werden, so wird die Referenzposition 9 zuerst mit einer Referenzierungsroutine gefunden, die ein Durchrutschen der Rutschkupplung nicht zulässt.

So kann etwa bei einer selbst öffnenden Kupplung der Aktor durch die Kupplung selbstständig in die "Kupplung offen" Position gedrückt werden, wobei der Aktor die Geschwindigkeit aktiv begrenzt, zum Beispiel indem er entgegengesetzt der Bewegungsrichtung bestromt wird und so der Bewegung einen Widerstand entgegensetzt.

Der Aktor fährt somit mit einer geringen Geschwindigkeit in Richtung "Kupplung offen" und wird am Referenzpunkt, der als Anschlag ausgebildet ist, durch den Referenzpunkt angehalten.

Nach Stillstand des Aktors 1 wird die Referenzposition 9 als gefunden angenommen. Die Inkrementalwegmessung wird auf Null gesetzt oder der Wert, den die Inkrementalwertmessung in der gefundenen Position ausgibt wird gespeichert.

Nachdem die Referenzposition 9 gefunden wurde oder ein Punkt ermittelt wurde, der vorerst als Referenzposition angenommen wird, wird der Motor so bestromt, dass die Traverse bei korrekt gefundenem Referenzpunkt und falls keine unerwünschten Hindernisse das Verfahren der Traverse behindern, die Traverse kurz vor dem Anschlag an einer Position 11 zum Stehen kommt.

Der Abstand zwischen dieser Position 11 und dem Anschlag 10 "Kupplung zu" hängt von den Toleranzen des Aktors ab, sollte aber so bemessen sein, dass der Aktor nicht gegen den Anschlag 10 fährt. Typischer Weise kann dieser Abstand 2mm betragen, bei einem typischen Gesamtfahrweg von 30mm. Dabei muss sicher gestellt sein, das ein Referenzierungsfehler der kleiner oder gleich diese Grenze ist, bei der Kupplungsstellung "offen" nicht zu einem unzulässig hohen übertragenen Kupplungsmoment führen darf.

War die Startposition nicht die tatsächliche Referenzposition, so beginnt beim Erreichen des Anschlages 10 "Kupplung zu", die Rutschkupplung durchzurutschen.

Wurde der Motor entsprechend der vorgegebenen Strecke betätigt, so wird erneut die Referenzposition 9 (Kupplung offen) mit der Referenzzierungsroutine angefahren. Ist die Differenz (gemessen im E-Motor), also in den Inkrementen zwischen der ersten ermittelten Referenzposition und der zweiten hinreichend klein, so ist die Plausibilisierung erfolgreich. Die Referenzposition kann zu weiteren Aktionen weiter verwendet werden.

### Zur Erläuterung werden einige Beispiele beschrieben:

In einem ersten Beispiel wird die Plausibilisierung eines korrekt gefundenen Referenzpunktes beschrieben. Die rotatorische Position des Elektromotors entspricht nach der Referenzierung einer translatorischen Position von 0 mm. Der Inkrementalwegmesser wird ebenfalls auf einen Wert von 0mm gesetzt. Die Traverse, die eine translatorische Bewegung vollführt, ist ebenfalls auf der Position 0 mm.

Wird nun der Elektromotor so verfahren, dass seine rotatorische Bewegung 28 mm einer translatorischen Bewegung der Traverse, wenn die Rutschkupplung nicht durchrutscht, entspricht, so befindet sich der Elektromotor in der Position 28 mm, der Inkrementalwegsensor gibt ebenfalls eine Wegstrecke von 28 mm wieder und die Traverse wurde auf eine Position 28 mm entfernt von der Referenzposition verfahren.

Wird nun eine zweite Referenzierungsroutine eingeleitet, also zum Beispiel bei selbst öffnenden Kupplungen der Motor des Aktors stromlos geschalten und so lange gewartet, bis sich der Aktor nicht mehr bewegt, so bewegt sich der Elektromotor in die ursprüngliche Position 0 mm, der Inkrementalmesser zeigt ebenfalls 0 mm an und die Traverse befindet sich in einer Position 0 mm vom Referenzpunkt entfernt. Werden nun die erhaltenen Werte der Inkrementalwegmessung nach den beiden Referenzierungen verglichen, so kommt man auf eine Differenz von 0mm -0mm, also 0mm. Der Referenzpunkt ist plausibel.

Befindet sich auf der Bahn der Traverse eine Verunreinigung zum Beispiel bei 5 mm, so wird der Elektromotor bei einer ersten Referenzierung bis auf den Endpunkt 5 mm bewegt. Hier stoppt die Bewegung des Aktors aufgrund der Verunreinigung und die Position des Fremdkörpers wird als Referenzpunkt angenommen. Die Inkrementalwegmessung nimmt einen Wert von 0 an und die Traverse befindet sich in einer Position 5 mm. Wird nun der Elektromotor um umgerechnet 28 mm translatorische Bewegung in Richtung "Kupplung zu" verfahren, so befindet sich der Elektromotor in einer Position umgerechnet 33 mm, der Inkrementalwegmesser nimmt einen Wert von 28 mm an und die Traverse befindet sich, da sie schon bei 5 mm gestartet ist, bei einer Position 30 mm, also am Ende des Verfahrwegs. Während der letzten 3 mm rutscht die Rutschkupplung durch. Wird nun die weitere Referenzierungsroutine durchgeführt, so bewegt sich die Traverse wieder zurück auf die Position, in der sie von dem Fremdkörper blockiert wird, bei 5mm. Da der Abstand zwischen der Endposition der Traverse beim Verfahren bei 30mm lag, die Inkrementalwegmessung jedoch, ausgehend vom ersten Referenzpunkt bei 5 mm, 28 mm gemessen hatte, ermittelt die Inkrementalwegmessung bei der zweiten Referenzierung einen Wert von 3 mm ( den Wert, den die Rutschkupplung durchgerutscht ist).

Der Elektromotor wird, da er von den 33 mm, die er umgerechnet in Richtung "Kupplung zu" verfahren wurde, nun um 25 mm in Richtung Kupplung gedrängt, bis die Traverse den vermeintlichen Referenzpunkt bei 5 mm erreicht hat und nimmt somit einen Wert von 8 mm an.

Die Differenz der beiden Werte des Inkrementalwegmessers nach der ersten und der zweiten Referenzierung sind somit 0 mm und 3 mm. Die Differenz ist also 3 mm und somit kann der Referenzpunkt nicht plausibilisiert werden. Dies kann zu einem erneuten Referenzierungsversuch führen oder zu einer Fehlermeldung.

Befindet sich bei der ersten Referenzierung ein Fremdkörper auf dem Weg der Traverse bei 5mm und bei der zweiten Referenzierung ein Fremdkörper bei 10 mm, so stellt sich die Situation folgendermaßen dar.

Nach dem ersten Referenzieren befindet sich der Elektromotor auf einer Position 5 mm, die Inkrementalwegmessung wird auf 0 gesetzt und die Traverse befindet sich in der Position ebenfalls 5 mm. Der Elektromotor wird um umgerechnet 28 mm verfahren, befindet sich somit in der Position 33 mm. Die Inkrementalwegmessung, die von einem Wert 0 ausgeht, nimmt nach dem Verfahren den Wert 28 mm an. Die Traverse wird auf die Endposition 30 mm verfahren und verbleibt dort, während die Rutschkupplung noch umgerechnet 3 mm durchrutscht.

Wird nun die zweite Referenzierung durchgeführt, befindet sich die Traverse nach der Referenzierung in der Position bei 10 mm, in der sie der zweite Fremdkörper am Weiterbewegen hindert. Die Traverse wurde also um eine Strecke von 20 mm, ausgehend von dem Endpunkt 30 mm verfahren

Die Inkrementalwegmessung, ausgehend von einem Wert von 28 mm nach dem Verfahren der Traverse, nimmt nach der zweiten Referenzierung einen Wert von 8 mm an.

Der Elektromotor geht von 33 mm aus nach dem Verfahren und kommt nach dem zweiten Referenzieren bei umgerechnet 13 mm zum Stehen.

Die Differenz der Inkrementalwegmessung ergibt 8 mm, die Plausibilisierung ist also nicht gelungen.

Befindet sich nun ein Fremdkörper bei 5mm Verfahrensweg, ist jedoch dieser Fremdkörper bei der zweiten Referenzierung nicht mehr vorhanden, so stellt sich die Situation wie folgt da:

Nach der ersten Referenzierung befindet sich der Motor in der Position 5 mm, die Inkrementalwegmessung wird auf 0 gestellt und die Traverse ist in der Position 5 mm. Der Elektromotor wird nun um 28 mm verfahren, so dass er bei einer Position 33 mm zum Stehen kommt. Die Inkrementalwegmessung zeigt 28 mm an. Die Traverse stößt nach 25 mm, bei der Position 30 mm an den gegenüberliegenden Anschlag, so dass die Rutschkupplung bei den letzen 3mm durchrutscht. Wird nun die zweite Referenzierung durchgeführt, so kommt die Traverse bei der Position 0 zum Stehen und wird also von der Position 30 mm um 30 mm verfahren.

Die Inkrementalwegmessung ergibt nach dem zweiten Referenzieren einen Wert von - 2mm, der Elektromotor geht auf die Position 3 mm zurück.

Nun ist die Differenz zwischen den beiden Inkrementalwegmessungen -2 mm, also entspricht der Betrag dem Unterschied zwischen dem maximalen Verfahrweg von 30mm der Traverse und dem gewünschte Verfahrweg von 28mm. Bei diesem Ergebnis kann entweder eine neue Plausibilisierung vorgenommen werde, oder man wählt eine Schwelle, unter der der Betrag der Differenz zwischen den beiden Inkrementalwegmessungen zu sein hat, damit die Plausibilisierung als korrekt gilt. Eine solche Schwelle kann die z.B. die Differenz zwischen der maximalen Verfahrstrecke der Traverse und der gewünschten Verfahrstrecke sein. In einem solchen Fall würde die obige Plausibilisierung als in Ordnung gewertet.

In einer weiteren Ausführungsform wird ein Aktor verwendet, der keine Rutschkupplung aufweist. Dabei muss jedoch eine Zeitbegrenzung beim Anfahren in Richtung "Kupplung zu" vorgesehen werden, da bei einem Fremdkörper im Verfahrweg, nicht die volle gewünschte Streckenlänge verfahren werden könnte und so das Verfahren nicht abgebrochen werden würde.

Bei der Auswertung der Plausibilisierung des Referenzpunktes muss jedoch bei dieser Ausführungsform der Weg zwischen der Endposition des Verfahrens und der zweiten Referenzposition bewertet werden. Ist die Differenz zwischen dem Wert, den die Inkrementalwegmessung nach dem Verfahren der Traverse um die gewünschte Strecke ergibt und dem Wert, der sich durch die Inkrementalwegmessung nach der zweiten Referenzierung ergibt, innerhalb des Wertebereichs 28mm ±2mm, so ist die Plausibilisierung erfolgreich.

Befindet sich in dem Verfahrweg der Traverse oder der Kupllung kein Widerstand so ergibt sich folgende Situation:

Nach dem ersten Referenzieren ist der Motor auf der Position 0 mm, die Inkrementalwegmessung wird auf 0 mm gesetzt und die Traverse ist ebenfalls auf der Position 0 mm. Wird nun der Motor um umgerechnet 28 mm verfahren, so ist der Motor auf der Position 28 mm, genauso wie die Traverse und die Inkrementalwegmessung zeigt einen Wert von 28 mm.

Nach einer zweiten Referenzierung ist sowohl der Motor, als auch die Traverse auf der Position 0 und die Inkrementalwegmessung ergibt den Wert 0. Der Vergleich der Inkrementalwegmessungen nach dem verfahren der Traverse und nach dem zweiten Referenzieren ergibt einen Wert von 28mm und somit ist die Plausibilisierung des Referenzpunktes erfolgreich.

Befindet sich ein Fremdkörper bei 5 mm, so ist nach dem ersten Referenzieren der Elektromotor bei der Position 5 mm, die Inkrementalwegmessung wird auf 0 gestellt und die Traverse befindet sich auf 5 mm. Soll nun die Traverse um 28 mm verfahren werden, so stößt sie nach 25 mm, bei der Position 30 mm auf den Anschlag. Der Elektromotor ist dann an der Position 30 mm, ebenso die Traverse, jedoch die Inkrementalwegmessung misst eine Position von 25 mm. Wird nun ein zweites Mal referenziert, so geht die Inkrementalwegmessung wieder auf 0 zurück und der Motor und die Traverse verharren bei 5 mm. Der Differenz zur Bewertung der Plausibilisierung beträgt nun 25 mm und liegt außerhalb dem Bereich 28mm +/- 2 mm und somit ist die Plausibilisierung nicht erfolgreich.

Befindet sich ein Fremdkörper bei der ersten Referenzierung bei 5 mm und bei der zweiten Referenzierung bei 10 mm, so ergibt sich folgende Situation:

Nach der ersten Referenzierung ist die Traverse und der Motor bei einer Position 5 mm, die Inkrementalwegmessung wird auf 0 gestellt. Soll die Traverse um 28 mm verfahren werden, so stößt sie bei 30 mm an den Anschlag und nimmt so zusammen mit dem Elektromotor eine Position bei 30 mm ein. Die Inkrementalwegmessung zeigt einen Wert von 25 mm an. Beim darauf folgenden Referenzierungsvorgang kommt die Traverse und der Motor bei 10 mm zum Stehen, sind also 20 mm verfahren worden. Die Inkrementalwegmessung gibt also einen Wert von 3 mm an. Wird nun die Differenz zwischen den beiden letzten Werten der Inkrementalwegmessung genommen, so ergibt sich ein Wert von 20 mm. Die Plausibilisierung war nicht erfolgreich.

Befindet sich ein Fremdkörper in dem Verfahrensweg 5 mm von der Position "Kupplung offen" gleich 0mm und ist dieser Fremdkörper bei der zweiten Referenzierung entfernt, so ergibt sich folgendes Bild:

Nach dem ersten Referenzieren befindet sich der Motor auf der Position 5 mm, ebenso die Traverse. Die Inkrementalwegmessung wird auf 0 gesetzt. Nach dem Verfahren ist die Traverse und der Motor auf der Position 30 mm, die Inkrementalwegmessung misst 25 mm. Nach dem zweiten Referenzieren ist dier Motor und die Traverse jeweils auf der Position 0 mm, die Inkrementalwegmessung zeigt - 5 mm. Wird nun die Differenz genommen, zur Berurteilung der Plausibilisierung, so ist der Differenz 25mm-(-5mm) also 30 mm. Dieser Wert ist innerhalb des Bereiches 28mm +/- 2 mm, somit ist die Plausibilisierung erfolgreich.

### Bezugszeichenliste

- 1.: Aktor
- 2.: Motor
- 3.: Verbindung zur Kupplung
- 4.: Rutschkupplung
- 5.: Spindel
- 6.: Traverse
- 7.: Gewinde
- 8.: Bewegung des Motors
- 8'.: Bewegung der Traverse
- 9.: Referenzposition
- 10.: Anschlag
- 11.: Endposition

## Patentansprüche

1. Verfahren zur Plausibilisierung eines Referenzpunktes (9) eines Aktors (1) zur Betätigung einer selbst öffnenden Kupplung, umfassend mindestens einen, von einem Referenzpunkt (9) verschiedenen, Anschlag (10) zur Begrenzung der Bewegung des Aktors (1) in einer Bewegungsrichtung, mit den Verfahrensschritten:
- Referenzierung des Referenzpunktes(9),
- Verfahren des Aktors (1) in Richtung des Anschlags (10) um eine vorbestimmte Strecke, die geringer ist als die Strecke zwischen dem Referenzpunkt (9) und dem Anschlag (10), oder falls der Anschlag (10) vorher erreicht wird bis zum Anschlag (10),
- nochmaliges Referenzieren des Referenzpunktes (9), **dadurch gekennzeichnet, dass** der Referenzpunkt (9) der Position "Kupplung offen" entspricht, wobei die Kupplung eine selbst öffnende Kupplung ist und der Aktor (1) im Zuge der Referenzierung durch die Kupplung gegen den Referenzpunkt (9) gedrückt wird und wobei bei der Referenzierung die Geschwindigkeit des Aktors (1) durch den Motor (2) aktiv begrenzt wird

2. Verfahren nach dem vorhergehenden Anspruch, **dadurch gekennzeichnet, dass** der Aktor (1) von einem Motor (2) angetrieben wird, der mit einer Inkrementalwegmessung versehen ist.

3. Verfahren nach dem vorherigen Anspruch, **dadurch gekennzeichnet, dass** der Motor (2) über eine Rutschkupplung (4) den Aktor (1) bewegt.

4. Verfahren nach dem vorherigen Anspruch 2, **dadurch gekennzeichnet**, das die Differenzen der Inkrementalwegmessung zwischen den zwei Referenzierungen zur Plausibilisierung ausgewertet wird.

5. Verfahren nach einem der vorherigen Ansprüche, **dadurch gekennzeichnet, dass** die Differenz zwischen dem Endpunkt (11) der Bewegung des Aktors (1) in Richtung des Anschlag (10) und dem Referenzpunkt (9) bei der zweiten Referenzierung als Größe zur Plausibilisierung des Referenzpunktes (9) herangezogen wird.

6. Verfahren nach Anspruch 3 bis5, **dadurch gekennzeichnet, dass** die Referenzierungen in der Art stattfinden, dass die Rutschkupplung (4) nicht durchrutscht.

7. Verfahren nach einem der vorherigen Ansprüche, **dadurch gekennzeichnet, dass** eine Zeitbegrenzung beim Verfahren des Aktors (1) zwischen dem Referenzpunkt (9) und dem Anschlag (10) vorgesehen ist.

## Claims

1. Method for verification of a reference point (9) of an actuator (1) for activating a self-opening clutch, comprising at least one stop (10), which is different from a reference point (9) and has the purpose of limiting the movement of the actuator (1) in a direction of movement, having the method steps:
- referencing the reference point (9),
- movement of the actuator (1) in the direction of the stop (10) by a predetermined distance which is shorter than the distance between the reference point (9) and the stop (10), or as far as the stop (10) if the stop (10) is reached previously,
- referencing the reference point (9) once more, **characterized in that** the reference point (9) corresponds to the position "clutch open", wherein the clutch is a self-opening clutch, and the actuator (1) is pressed against the reference point (9) by the clutch in the course of the referencing, and wherein during the referencing the speed of the actuator (1) is actively limited by the motor (2).

2. Method according to the preceding claim, **characterized in that** the actuator (1) is driven by a motor (2) which is provided with an incremental travel measurement means.

3. Method according to the preceding claim, **characterized in that** the motor (2) moves the actuator (1) by means of a slipped clutch (4).

4. Method according to the previous Claim 2, **characterized in that** the differences in the incremental travel measurement between the two referencing operations are evaluated for the purpose of verification.

5. Method according to one of the preceding claims, **characterized in that** the difference between the end point (11) of the movement of the actuator (1) in the direction of the stop (10) and the reference point (9) during the second referencing operation is used as a variable for the verification of the reference point (9).

6. Method according to Claims 3 to 5, **characterized in that** the referencing operations take place in such a way that the slipped clutch (4) does not slip.

7. Method according to one of the preceding claims, **characterized in that** time limitation is provided during the movement of the actuator (1) between the reference point (9) and the stop (10).

## Revendications

1. Procédé de vérification de la plausibilité d'un point de référence (9) d'un actionneur (1) pour l'actionnement d'un embrayage à ouverture automatique, comprenant au moins une butée (10) différente du point de référence (9), pour limiter le mouvement de l'actionneur (1) dans une direction de déplacement, comprenant les étapes de procédé suivantes :
- référencement du point de référence (9),
- déplacement de l'actionneur (1) dans la direction de la butée (10) sur une distance prédéterminée, qui est inférieure à la distance entre le point de référence (9) et la butée (10), ou, si la butée (10) a été atteinte préalablement, jusqu'à la butée (10),
- nouveau référencement du point de référence (9),
**caractérisé en ce que**
le point de référence (9) correspond à la position "embrayage ouvert", l'embrayage étant un embrayage à ouverture automatique et l'actionneur (1) au cours du référencement étant pressé par l'embrayage contre le point de référence (9) et lors du référencement, la vitesse de l'actionneur (1) étant limitée activement par le moteur (2).

2. Procédé selon la revendication précédente, **caractérisé en ce que** l'actionneur (1) est entraîné par un moteur (2) qui est pourvu d'une mesure de course incrémentale.

3. Procédé selon la revendication précédente, **caractérisé en ce que** le moteur (2) déplace l'actionneur (1) par le biais d'un embrayage à glissement (4).

4. Procédé selon la revendication précédente 2, **caractérisé en ce que** les différences de mesure de course incrémentale entre les deux référencements sont analysées en vue d'effectuer la vérification de la plausibilité.

5. Procédé selon l'une quelconque des revendications précédentes, **caractérisé en ce que** la différence entre le point de fin de course (11) du mouvement de l'actionneur (1) dans la direction de la butée (10) et le point de référence (9) lors du deuxième référencement est utilisée comme grandeur pour effectuer la vérification de la plausibilité du point de référence (9).

6. Procédé selon les revendications 3 à 5, **caractérisé en ce que** les référencements ont lieu de manière à ce que l'embrayage à glissement (4) ne patine pas.

7. Procédé selon l'une quelconque des revendications précédentes, **caractérisé en ce qu'**il est prévu une limitation temporelle lors du déplacement de l'actionneur (1) entre le point de référence (9) et la butée (10).
